(19) Europäisches Patentamt
European Patent Office
Office européen des brevets

(11) **EP 2 995 927 A1**

(12) **EUROPÄISCHE PATENTANMELDUNG**

(43) Veröffentlichungstag:
16.03.2016 Patentblatt 2016/11

(51) Int Cl.:
**G01N 9/04** (2006.01)　　　　**G01N 9/26** (2006.01)
**G01F 23/14** (2006.01)

(21) Anmeldenummer: **15185211.8**

(22) Anmeldetag: **15.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **15.09.2014   DE 102014218487**

(71) Anmelder: **Hoppe Bordmesstechnik GmbH 22525 Hamburg (DE)**

(72) Erfinder: **Rohde, Helmut 22587 Hamburg (DE)**

(74) Vertreter: **Knoop, Philipp Vonnemann Kloiber & Kollegen An der Alster 84 20099 Hamburg (DE)**

(54) **VERFAHREN ZUM BESTIMMEN EINER BRENNSTOFFMASSE UND EINER BRENNSTOFFDICHTE**

(57)　　Um ein Verfahren zum Bestimmen einer Brennstoffdichte umfassend den Schritt

a. laufendes Messen eines hydrostatischen Drucks am Boden des Tanks;

ein Verfahren zum Bestimmen der Brennstoffmasse sowie eine Auswerte- und Steuereinheit (15) zum Bestimmen einer Brennstoffdichte der eingangs genannten Art und eine Auswerte- und Steuereinheit (15) der eingangs genannten Art zum Bestimmen einer Brennstoffmasse anzugeben, welche jeweils eine genauere Bestimmung der Dichte beziehungsweise der Masse ermöglichen, wird vorgeschlagen, dass

es folgende weitere Schritte umfasst:

b. Variieren des Füllvolumens des in dem Tank (1) gebunkerten Brennstoffs durch Zu- oder Abführen einer Brennstoffmenge mit einem Brennstoffvolumenstrom (21);c. Berechnen der Dichte in Abhängigkeit des Drucks und einer weiteren bei Schritt b) veränderlichen Größe.

Fig.1

**Beschreibung**

Die vorliegende Erfindung betrifft ein Verfahren zum Bestimmen einer Brennstoffdichte eines in einem Tank, insbesondere Bunkertank eines Schiffes, gebunkerten Brennstoffs, umfassend den Schritt

a. laufendes Messen eines hydrostatischen Drucks am Boden des Tanks.

Die vorliegende Erfindung betrifft gleichermaßen ein Verfahren zur Bestimmung der Brennstoffmasse eines in einem Tank, insbesondere Bunkertank eines Schiffes, gebunkerten Brennstoffs, umfassend die Schritte

    a. Bestimmen einer Brennstoffdichte des Brennstoffs;

    b. Messen eines hydrostatischen Drucks am Boden des Tanks;

    c. Bestimmen eines Füllstands als Funktion des im Schritt b) gemessenen Drucks und der im Schritt a) bestimmten Dichte;

    d. Ermitteln eines Füllvolumens als Funktion des Füllstandes;

    e. Berechnen der Brennstoffmasse als Funktion der Brennstoffdichte und des Füllvolumens.

Weiterhin betrifft die vorliegende Erfindung eine datentechnische Auswerte- und Steuereinheit zur Durchführung eines Verfahrens nach einem der Ansprüche 1-13 zum Bestimmen einer Brennstoffdichte eines in einem Tank, insbesondere Bunkertank eines Schiffes, gebunkerten Brennstoffs.

Schließlich betrifft die vorliegende Erfindung eine datentechnische Auswerte- und Steuereinheit zur Durchführung eines Verfahrens nach einem der Ansprüche 14-15 zum Bestimmen einer Brennstoffmasse eines in einem Tank, insbesondere Bunkertank eine Schiffes, gebunkerten Brennstoffs.

Klimawandel und der enorme weltweite Anstieg der Brennstoffkosten machen es erforderlich, den Brennstoffverbrauch zu reduzieren und die Brennstoffqualität zu verbessern. Dies trifft besonders auf Schiffe zu.

Gegenstand der vorliegenden Patentanmeldung sind daher ganz allgemein Verfahren und Vorrichtungen, die es möglich machen, die Masse des an Bord eines Schiffes gebunkerten Brennstoffes automatisch zu erfassen, die chemisch gebundene Energie zu bestimmen, den schiffsinternen Transfer zu verifizieren sowie den Verbrauch des Brennstoffs und seine Umwandlung in andere Energieformen zu bilanzieren, um Kennwerte und einen Key Performance Indicator (KPI) zu bilden, der eine Bewertung des aktuellen Brennstoffverbrauchs im Zusammenhang mit dem Schiffsbetrieb sowie mit Transport- und Motorenleistung ermöglicht. In diesem Zusammenhang sind Verfahren zum Bestimmen einer Brennstoffdichte der eingangs genannten Art bekannt, bei welchen die Dichte unter Berücksichtigung der Ergebnisse einer Temperaturmessung bestimmt wird. Die Messung der Brennstoffdichte, insbesondere auf Schiffen, ist indes häufig problematisch beziehungsweise kostspielig.

Entsprechend kranken auch bekannte Verfahren zur Bestimmung der Brennstoffmasse der eingangs genannten Art an der Problematik oder in der Praxis fehlender Bestimmung einer Brennstoffdichte des Brennstoffs. Da die Bunkertemperatur im Schiffsbetrieb Schwankungen unterliegt und da in unterschiedlichen Volumenabschnitten des Tanks in der Regel unterschiedliche Temperaturen vorherrschen, treten in der Praxis häufig Fehler bei der Massebestimmung des Brennstoffs auf, welche im Prozentbereich liegen können. Aufgrund der erheblichen absoluten Mengen, die insbesondere in der Schifffahrt umgesetzt werden, kann aufgrund von Fehlern bei der Dichtebestimmung beziehungsweise bei einem Vernachlässigen von Dichtevariationen in absoluten Zahlen eine erhebliche Abweichung auftreten. Dies kann enorme nachteilige wirtschaftliche Dimensionen erreichen, beispielsweise bei einer Bebunkerung.

Es besteht daher ein Bedarf an Verfahren und Vorrichtungen, die eine verbesserte und zudem kostengünstige und praktikable Bestimmung der Dichte und Masse einer in einem Tank gebunkerten Brennstoffmenge ermöglichen.

Aufgabe der vorliegenden Erfindung ist es daher, ein Verfahren zum Bestimmen einer Brennstoffdichte der eingangs genannten Art, ein Verfahren zum Bestimmen der Brennstoffmasse sowie eine Auswerte- und Steuereinheit zum Bestimmen einer Brennstoffdichte der eingangs genannten Art und eine Auswerte- und Steuereinheit der eingangs genannten Art zum Bestimmen einer Brennstoffmasse anzugeben, welche jeweils eine genauere Bestimmung der Dichte beziehungsweise der Masse ermöglichen.

Erfindungsgemäß wird diese Aufgabe hinsichtlich eines Verfahrens zum Bestimmen einer Brennstoffdichte eines in einem Tank, insbesondere Bunkertank eines Schiffes, gebunkerten Brennstoffs, umfassend die Schritte

    a. laufendes Messen eines hydrostatischen Drucks am Boden des Tanks; gelöst, welches folgende weitere Schritte umfasst:

    b. Variieren des Füllvolumens des in dem Tank gebunkerten Brennstoffs durch Zu- oder Abführen einer Brennstoffmenge mit einem Brennstoffvolumenstrom;

    c. Berechnen der Dichte in Abhängigkeit des Drucks und einer weiteren bei Schritt b) veränderlichen Größe.

Im Rahmen der Erfindung kann das Füllvolumen des in dem Tank gebunkerten Brennstoffs beispielsweise durch Zuführen einer Brennstoffmenge mit einem Brennstoffvolumenstrom beim Bebunkern variiert werden. Gleichermaßen kann im Rahmen der Erfindung das Füllvolumen variiert werden, indem ein Brennstoffvolumenstrom an Verbraucher, insbesondere an nachgelagerte Setztanks oder Verbrauchtanks, abgeführt wird. Die laufende Messung des hydrostatischen Drucks am Boden des Tanks kann in jeder dem Fachmann auf dem einschlägigen Gebiet bekannten Art und Weise erfolgen, beispielsweise durch Drucksensoren. Um den zeitlichen Verlauf des hydrostatischen Drucks zu ermitteln, ist im Rahmen der Erfindung eine kontinuierliche oder quasi kontinuierliche Aufnahme von Messwerten des hydrostatischen Drucks in zeitlicher Folge sinnvoll, mithilfe einer entsprechend konfigurierten Auswerte- und Steuereinheit.

In vorteilhafter Ausgestaltung des erfindungsgemäßen Verfahrens umfasst es einen gleichzeitig mit Schritt b) auszuführenden weiteren Schritt

> d. Ermitteln einer zeitlichen Druckänderungsrate (23, 24) des hydrostatischen Drucks;

wobei die weitere veränderliche Größe die zeitliche Druckänderungsrate (23, 24) des hydrostatischen Drucks ist. Durch die Ermittlung der Druckänderungsrate ist es mit Vorteil möglich, markante Füllstände im Tank, an denen sich die Querschnittsgeometrie merklich ändert, zu ermitteln. Letzteres kann analytisch durch Auswertung der Druckänderungsrate erfasst werden, welche sich an einem derartigen markanten Füllstand ebenfalls merklich ändert. Auf diese Weise kann anhand der Druckmessung prinzipiell ohne Kenntnis der Dichte ein markanter Füllstand festgestellt werden, wenn bezüglich der Tankgeometrie bekannt ist, wo sich der Tankquerschnitt markant ändert. Voraussetzung ist, dass der Brennstoffvolumenstrom sich nicht gleichzeitig markant ändert. Ein zeitliches Zusammenfallen einer markanten Änderung im Brennstoffvolumenstrom mit einem markanten Füllstand ist in der Praxis indes äußerst unwahrscheinlich. Das Auftreten einer markanten Änderung der Druckänderungsrate wird somit als Methode zur Feststellung eines bestimmten Füllstands herangezogen. Die Ermittlung der Dichte bei gleichzeitig bekanntem Füllstand und hydrostatischem Druck kann dann zur Bestimmung der Dichte beispielsweise nach der bekannten Formel

$$\rho = \frac{p}{gh}$$

ermittelt werden, wobei

ρ    die zu bestimmende Brennstoffdichte,

p    der hydrostatische Druck,

g    die Erdbeschleunigung

h    den Füllstand

bezeichnen.

Wenn das Verfahren in anderer Ausgestaltung der Erfindung einen gleichzeitig mit Schritt b) auszuführenden weiteren Schritt

> e. Auslesen des Ausgangssignals eines bei einem gegebenen Referenzfüllstand schaltenden Füllstandsgrenzwertgebers;

umfasst, wobei die weitere veränderliche Größe das Ausgangssignal des Füllstandsgrenzwertgebers ist, kann die Dichte anhand der obigen Formel auch bestimmt werden, ohne dass es darauf ankommt, dass der Tank einen markanten Referenzfüllstand aufweist, an dem sich die Querschnittsgeometrie sprunghaft ändert.

In vorteilhafter Ausgestaltung der Erfindung erfolgt das Variieren des Füllvolumens derart, dass der Füllstand einen Referenzfüllstand überstreicht; und folgender weiterer Schritt durchgeführt wird:

> f. Ermitteln des Referenzfüllstands;

wobei die Berechnung der Dichte als Funktion des Referenzfüllstands und des hydrostatischen Drucks beim Referenzfüllstand erfolgt. In diesem Falle ermöglicht die Ermittlung eines Referenzfüllstands bei gleichzeitiger Kenntnis des hydrostatischen Drucks die Bestimmung der Dichte.

Um sicherzustellen, dass eine zur Identifizierung eines markanten Füllstands herangezogener markante Änderung des zeitlichen Verlaufs des hydrostatischen Drucks nicht tatsächlich durch eine Änderung im Brennstoffvolumenstrom hervorgerufen wurde, sieht die Erfindung in einer vorteilhaften Ausgestaltung vor, dass der Brennstoffvolumenstrom während Schritt b) konstant gehalten wird.

Gemäß einer günstigen Ausführungsform der Erfindung wird, vorzugsweise bei konstantem Brennstoffvolumenstrom, bei Detektion einer signifikanten Änderung des hydrostatischen Drucks während Schritt b) ein zugehöriger Füllstand des Tanks ermittelt, indem in einer Tanktabelle ein Übergangsfüllstand, an dem eine signifikante Änderung der Füllstandsänderungsrate vorliegt, ausgewählt wird. Der Übergangsfüllstand kann beispielsweise der Füllstand an einer Kante des Tanks oder der Füllstand an einer Aufkimmung des Tanks sein. Im Rahmen der Erfindung kann jedoch gleichermaßen auch der Füllstand an einer anderen geometrischen Eigenart des Tanks als Übergangsfüllstand herangezogen werden.

Eine Füllstandsänderungsrate, welche einer Änderung des Füllvolumens für einen gegebenen Tank entspricht, gibt erfindungsgemäß an, um wie viel Längeneinheiten sich der Füllstand ändert, wenn sich das Füllvolumen um einen gegebenen Volumenzu- oder Abfluss ändert. Die Füllstandsänderungsrate kann im Rahmen der Erfindung auf unterschiedliche Weise ermittelt werden. Im Prinzip ist es denkbar, in zeitlicher Folge den Füllstand mit dem Fachmann wohl bekannten Methoden zu messen und gleichzeitig den Brennstoffvolumenstrom, der zu- oder abgeführt wird, festzustellen, um so auf eine Änderung des Füllvolumens zu schließen, um im Ergebnis die Füllstandsänderungsrate zu ermitteln.

Eine Ausführungsform der Erfindung sieht vor, dass der Tank eine in vertikaler Richtung variable Querschnittsfläche aufweist, wobei das Variieren des Füllvolumens vorzugsweise derart erfolgt, dass der Füllstand über einen Bereich mit einer signifikanten Änderung der Querschnittsfläche des Tanks variiert. Hierdurch ist es möglich, durch Beobachten einer signifikanten Änderung der zeitlichen Druckänderungsrate des hydrostatischen Drucks einem einem Druckmesswert zugeordneten Füllstand zu ermitteln, sofern die Tankgeometrie bekannt ist. Auf diese Weise kann anhand der obigen Formel die Dichte bestimmt werden.

Insbesondere kann erfindungsgemäß der Tank mindestens zwei übereinander angeordnete quaderförmige Abschnitte aufweisen, wobei der Übergangsfüllstand am Übergang zwischen den quaderförmigen Abschnitten vorliegt.

Um das erfindungsgemäße Verfahren bei beliebigen Tankgeometrien, also auch bei solchen, welche keine sprunghafte Querschnittsveränderung aufweisen, anwenden zu können, sieht eine Variante der Erfindung vor, dass das Verfahren folgenden weiteren Schritt umfasst

g. Ermitteln einer, einer Änderung des Füllvolumens entsprechenden, Füllstandsänderungsrate des Füllstands;

wobei die Berechnung der Dichte als Funktion der zeitlichen Druckänderungsrate, der Füllstandsänderungsrate und des Brennstoffvolumenstroms durchgeführt wird

Die Berechnung der Dichte als Funktion der zeitlichen Druckänderungsrate, der Füllstandsänderungsrate sowie des Brennstoffvolumenstroms kann im Rahmen einer alternativen Ausgestaltung der Erfindung insbesondere anhand folgender Formel erfolgen:

$$\rho = \frac{\frac{\partial p}{\partial t}}{g \frac{\partial V}{\partial t} \frac{\partial h}{\partial V}}$$

wobei

$\rho$ die zu bestimmende Brennstoffdichte,

$\frac{\partial p}{\partial t}$ die zeitliche Druckänderungsrate,

$g$ die Erdbeschleunigung

$\frac{\partial V}{\partial t}$ den Brennstoffvolumenstrom und

$\frac{\partial h}{\partial V}$ die Füllstandsänderungsrate bezeichnen.

In Ausgestaltung des erfindungsgemäßen Verfahrens zum Bestimmen einer Brennstoffdichte wird die Füllstandsänderungsrate anhand einer den Zusammenhang zwischen Füllstand und Füllvolumen kennzeichnenden Tanktabelle ermittelt. In der Praxis liegt häufig eine sogenannte Tanktabelle für einen gegebenen Tank vor, in welcher zu einem gegebenen Füllstand ein zugehöriges Füllvolumen tabelliert ist beziehungsweise umgekehrt einem gegebenen Füllvolumen ein entsprechender Füllstand zugeordnet ist.

In weiterer vorteilhafter Ausgestaltung des erfindungsgemäßen Verfahrens zum Bestimmen einer Brennstoffdichte wird das Füllvolumen des im Tank gebunkerten Brennstoffs gemessen. Dies ist in den Fällen vorteilhaft, in denen die Füllstandsänderungsrate mit der Füllhöhe beziehungsweise - äquivalent dazu - mit dem Füllvolumen variiert, also bei Tanks mit in Abhängigkeit der Füllstandshöhe unterschiedlicher Querschnittsfläche. In diesen Fällen ermöglicht die Messung des Füllvolumens beispielsweise im Zusammenhang mit einer Tanktabelle die Feststellung der für die Berechnung der Dichte maßgeblichen Füllstandsänderungsrate. Das Füllvolumen kann über eine dem Fachmann wohlbekannte Füllstandsmessung oder auf andere Weise gemessen werden.

Um das erfindungsgemäße Verfahren zum Bestimmen einer Brennstoffdichte auch bei Tanks mit über die Füllstandshöhe variabler Tankgeometrie fehlerfrei einsetzen zu können, beispielsweise unter Zugrundelegung der obigen Formel, kann in vorteilhafter Ausgestaltung des Verfahrens die Füllstandsänderungsrate als Funktion des Füllvolumens des Tanks ermittelt werden. Im einfachsten Fall erfolgt die Ermittlung durch Auswerten der Tanktabelle. Alternativ, beispielsweise falls eine Tabelle nicht vorhanden sein sollte, kann in einem kontrollierten Bebunkerungsvorgang bei gleichzeitiger Messung des Brennstoffvolumenstroms und des Füllstands die Füllstandsänderungsrate als Funktion des Füllvolumens ermittelt werden.

In spezieller vorteilhafter Ausgestaltung des erfindungsgemäßen Verfahrens zum Bestimmen einer Brennstoffdichte weist der Tank eine in vertikaler Richtung variable Querschnittsfläche auf, wobei das Variieren des Füllvolumens derart erfolgt, dass der Füllstand über einen Bereich mit einer signifikanten Änderung der Querschnittsfläche des Tanks variiert. Gemäß dieser Ausgestaltung der Erfindung kann mit Vorteil anhand einer Tanktabelle die maßgebliche Füllstandsänderungsrate ermittelt werden, ohne dass das Füllvolumen des im Tank gebunkerten Brennstoffs gemessen werden muss. Denn wenn während der Durchführung des Schrittes B. der Füllstand den Bereich mit einer signifikanten Änderung der Querschnittsfläche des Tanks übersteigt, schlägt sich dies in einer signifikanten Änderung des Drucks nieder, was eine Volumenbestimmung ermöglicht.

Besonders günstig ist es für das erfindungsgemäße Verfahren zum Bestimmen einer Brennstoffdichte, wenn der Brennstoffvolumenstrom während Schritt B konstant gehalten wird. Diese Bedingung liegt in der Praxis häufig beim Bebunkern vor. In diesem Fall genügt eine einmalige Messung des Brennstoffvolumenstroms, welcher in die Berechnung der Dichte im Weiteren als Konstante angenommen werden kann. Die Berechnung und Durchführung des Verfahrens vereinfacht sich auf diese Weise mit Vorteil.

In bevorzugter Ausgestaltung des erfindungsgemäßen Verfahrens wird, vorzugsweise bei konstantem Brennstoffvolumenstrom, bei Detektion einer signifikanten Änderung des hydrostatischen Drucks während Schritt B) ein zugehöriger Füllstand des Tanks ermittelt, indem in einer Tanktabelle ein Übergangsfüllstand, an dem eine signifikante Änderung der Füllstandsänderungsrate vorliegt, ausgewählt wird. Dem liegt die Überlegung zu Grunde, dass signifikante, zum Beispiel sprunghafte, Änderungen des hydrostatischen Drucks bei konstantem Brennstoffvolumenstrom auf eine signifikante, insbesondere sprunghafte, Änderung der Füllstandsänderungsrate zurückzuführen sind, welche ihrerseits wiederum auf eine signifikante, zum Beispiel sprunghafte, Änderung der Querschnittsfläche des Tanks zurückgeht. Gemäß dieser Ausgestaltung des erfindungsgemäßen Verfahrens ist mit Vorteil keine Messung des Füllvolumens des im Tank gebunkerten Brennstoffs erforderlich.

Eine spezielle Ausgestaltung des erfindungsgemäßen Verfahrens sieht vor, dass der Tank mindestens zwei übereinander angeordnete quaderförmige Abschnitte aufweist, wobei der Übergangsfüllstand am Übergang zwischen den quaderförmigen Abschnitten vorliegt. Eine derartige Tankform ist bei Schiffen gebräuchlich. An den Übergängen der quaderförmigen Abschnitte ändert sich sprunghaft mit der Füllhöhe die Querschnittsfläche des Tanks. Dies macht sich das erfindungsgemäße Verfahren in dieser Ausgestaltung zu Nutze, um im Ergebnis das Füllvolumen anhand der Tanktabelle zu ermitteln. In Verbindung mit der erfindungsgemäßen Druckmessung wird auf diese Weise überraschend einfach eine Dichtebestimmung ermöglicht.

Soweit die der Erfindung zu Grunde gelegte Aufgabe ein Verfahren zur Bestimmung der Brennstoffmasse eines in einem Tank, insbesondere Bunkertank eines Schiffes, gebunkerten Brennstoffs der eingangs genannten Art betrifft, wird die Aufgabe erfindungsgemäß dadurch gelöst, dass die Brennstoffdichte anhand eines Verfahrens nach einem der Ansprüche 1-9 bestimmt wird. Auf diese Weise ist mit Vorteil eine Dichte korrigierte Bestimmung der Brennstoffmasse anhand einer Messung des hydrostatischen Drucks am Boden des Tanks möglich. Denn der Füllstand kann gemäß Schritt C durch folgende Formel bestimmt werden:

$$h = \frac{p}{g\rho}$$

wobei

ρ    die Brennstoffdichte,
g    die Erdbeschleunigung und
p    den hydrostatischen Druck am Tankboden

bezeichnen.

In Ausgestaltung des erfindungsgemäßen Verfahrens zur Bestimmung der Brennstoffmasse wird das Füllvolumen anhand einer den Zusammenhang zwischen Füllstand und Füllvolumen kennzeichnenden Tanktabelle ermittelt. Sofern eine Tanktabelle vorliegt, was zumeist der Fall ist, genügt eine Messung des hydrostatischen Drucks am Boden des Tanks, um die Brennstoffmasse als Funktion der Brennstoffdichte und des Füllvolumens zu berechnen.

Hinsichtlich der eingangs genannten datentechnischen Auswerte- und Steuereinheit zur Durchführung eines Verfahrens zum Bestimmen einer Brennstoffdichte der eingangs genannten Art wird die der Erfindung zu Grunde liegende Aufgabe dadurch gelöst, dass die Auswerte- und Steuereinheit ausgelegt ist, um gleichzeitig mit Schritt b) eine zeitliche Druckänderungsrate des hydrostatischen Drucks sowie eine, einer Änderung des Füllvolumens entsprechende, Füllstandsänderungsrate des Füllstands zu ermitteln und die Dichte als Funktion der zeitlichen Druckänderungsrate, der Füllstandsänderungsrate und des Brennstoffvolumenstroms zu berechnen. Erfindungsgemäß ist die Auswerte- und Steuereinheit somit eigens eingerichtet und programmiert, um die Verfahrensschritte gemäß einem der Patentansprüche 1-9 auszuführen.

Insbesondere weist in vorteilhafter Ausgestaltung der Erfindung die Auswerte- und Steuereinheit eine Datenbank mit einer den Zusammenhang zwischen Füllstand und Füllvolumen kennzeichnenden Tanktabelle auf.

In anderer Ausgestaltung umfasst die Auswerte- und Steuereinheit Druckmessmittel zum Messen eines hydrostatischen Drucks am Boden des Tanks und/oder Mittel zum Ermitteln eines Brennstoffvolumenstroms.

Hinsichtlich der auf eine datentechnische Auswerte- und Steuereinheit zur Durchführung eines Verfahrens zum Bestimmen einer Brennstoffmasse gerichteten Aufgabe besteht die Lösung darin, dass diese eigens zur Durchführung eines Verfahrens nach einem der Ansprüche 10-11 konfiguriert ist und dass sie vorzugsweise Druckmessmittel zum Messen eines hydrostatischen Drucks am Boden des Tanks und/oder Mittel zum Ermitteln eines Brennstoffvolumenstroms umfasst.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

Figur 1: schematische Darstellung eines Vertikalschnitts durch einen Bunkertank;

Figur 2: grafische Darstellung des funktionalen Zusammenhangs zwischen Füllstandshöhe H und Füllvolumen V (oben) sowie der Füllstandsänderungsrate $\frac{\partial h}{\partial V}$ in Abhängigkeit vom Füllvolumen V (unten) für den Bunkertank gemäß Figur 1;

Figur 3: grafische Darstellung des Verlaufs des Füllvolumens V(t) in Abhängigkeit von der Zeit t sowie des Brennstoffvolumenstroms $\frac{\partial V}{\partial t}$ in Abhängigkeit von der Zeit t während eines Bebunkerungsvorgangs mit konstantem Brennstoffvolumenstrom $\frac{\partial V}{\partial t}$;

Figur 4: grafische Veranschaulichung des zeitlichen Verlaufs des hydrostatischen Drucks bei der Durchführung des erfindungsgemäßen Verfahrens an dem Tank gemäß Figur 1 bei Variation des Brennstoffvolumenstroms wie in Figur 3 veranschaulicht (oben), grafische Veranschaulichung der zeitlichen Druckänderungsrate $\frac{\partial p}{\partial t}$ bei den genannten Verhältnissen (unten).

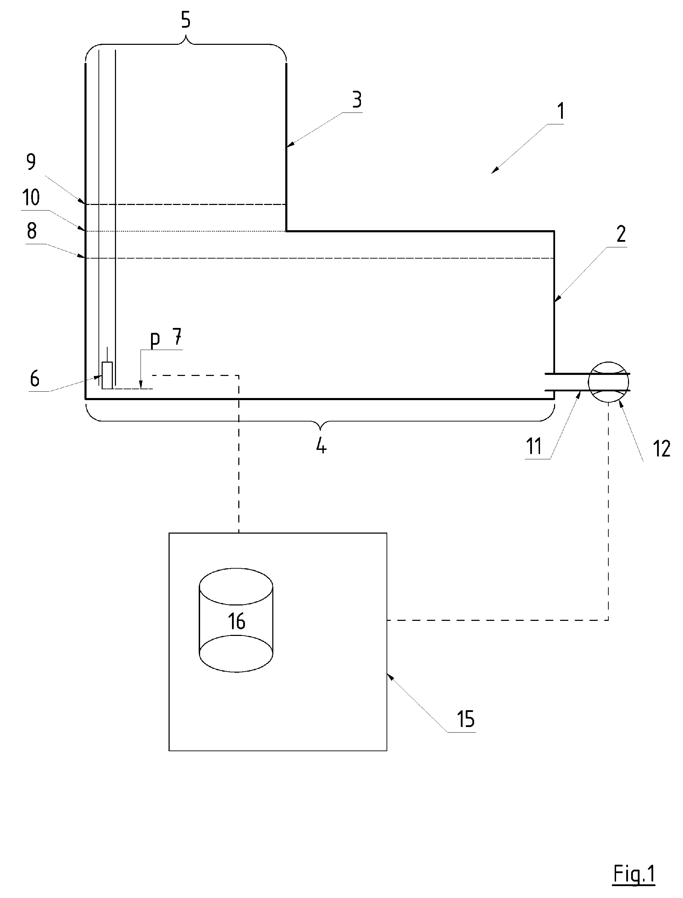

Die Figur 1 zeigt in einer vertikalen Schnittansicht rein schematisch einen Bunkertank 1. Der Bunkertank 1 weist einen unteren quaderförmigen Abschnitt 2 sowie einen sich an den unteren quaderförmigen Abschnitt 2 nach oben anschließenden oberen quaderförmigen Abschnitt 3 auf. Wie in der Figur 1 zu erkennen, ist eine Querschnittsfläche 4 des unteren quaderförmigen Abschnitts 2 größer als eine Querschnittsfläche 5 des oberen quaderförmigen Abschnitts 3. Der Bunkertank 1 ist mit einer nur schematisch dargestellten Druckmesssonde 6 versehen, welche in üblicher Weise einen hydrostatischen Druck p am Boden des Bunkertanks 1 messen kann.

Weiter ist in der Figur 1 ein unterer Füllstand 8 unterhalb des Übergangs zwischen dem unteren quaderförmigen Abschnitt 2 und dem oberen quaderförmigen Abschnitt 3 des Bunkertanks 1 eingezeichnet. Weiter ist ein oberer Füllstand 9 eingezeichnet, welcher oberhalb des besagten Übergangsbereichs angeordnet ist. Schließlich ist zwischen dem unteren Füllstand 8 in dem oberen Füllstand 9 ein Übergangsfüllstand 10 eingezeichnet, welcher genau an dem Übergangsbereich zwischen dem unteren quaderförmigen Abschnitt 2 und dem oberen quaderförmigen Abschnitt 3 liegt.

Weiter ist in der Figur 1 schematisch angedeutet, dass der Bunkertank 1 einen Zu- und Ablauf 11 mit einem Durchflussmesser 12 aufweist. Der Durchflussmesser 12 ist optional. Anstelle eines Durchflussmessers kann auch jedes geeignete Mittel vorgesehen sein, welches es ermöglicht festzustellen, ob der Durchfluss konstant ist oder veränderlich.

Weiter ist in der Figur 1 eine erfindungsgemäße datentechnische Auswerte- und Steuereinheit 15 schematisch angedeutet. Die Auswerte- und Steuereinheit 15 weist eine Datenbank 16 auf. In der Datenbank 16 ist eine den Zusammenhang zwischen Füllstand und Füllvolumen kennzeichnende Tanktabelle hinterlegt. Die Auswerte- und Steuereinheit 15 ist mit nicht näher dargestellten Dateneingängen für den hydrostatischen Druck p am Boden des Bunkertanks 1 und für den Brennstoffvolumenstrom als Messausgang des Durchflussmessers 12 im Zu- und Ablauf 11 versehen.

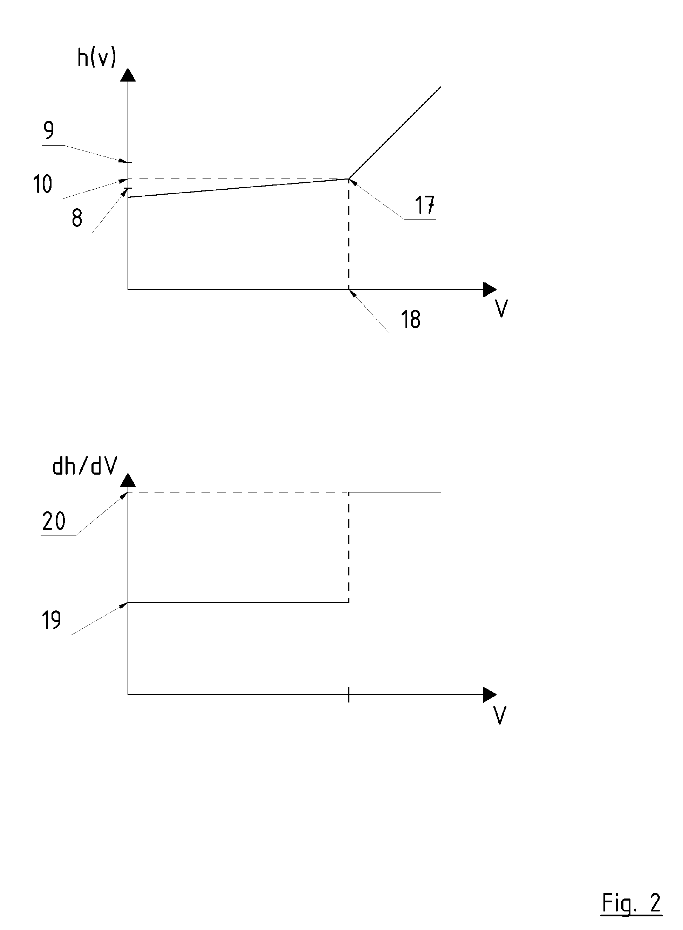

In Figur 2 sind die in der Datenbank 16 in der Auswerte- und Steuereinheit 15 abgelegten Daten einer Tanktabelle zu dem Bunkertank 1 grafisch dargestellt. Dabei zeigt die obere Grafik den funktionalen Zusammenhang zwischen dem Füllstand h(V) in Abhängigkeit vom Füllvolumen V. Das untere Bild der Figur 2 zeigt demgegenüber die Füllstandsänderungsrate $\frac{\partial h}{\partial V}$, also das Differenzial des Füllstands H in Bezug auf das Volumen V. Wie zu erkennen, weist die obere im Bild gezeigte Kurve bei dem Übergangsfüllstand 10 einen Knick auf, da sich aufgrund der geringeren Querschnittsfläche 5 im oberen quaderförmigen Abschnitt 3 des Bunkertanks 1 bei gleichem Volumenzufluss der Füllstand stärker ändert als dies im Bereich des unteren quaderförmigen Abschnitts 2 der Fall ist. Der Knick 17 ist als signifikante Änderung datenanalytisch leicht zu ermitteln. Das dem Knick 17 im oberen Bild zugeordnete Volumen 18 entspricht dabei dem Volumen des unteren quaderförmigen Abschnitts 2 des Bunkertanks 1.

Das untere Bild in Figur 2 veranschaulicht, dass im Bereich des Füllvolumens 18 eine signifikante Änderung der Füllstandsänderungsrate $\frac{\partial h}{\partial V}$ Auftritt, und zwar von dem kleineren konstanten Wert 19 zu dem größeren konstanten Wert 20, welcher im oberen quaderförmigen Abschnitt 3 maßgeblich ist.

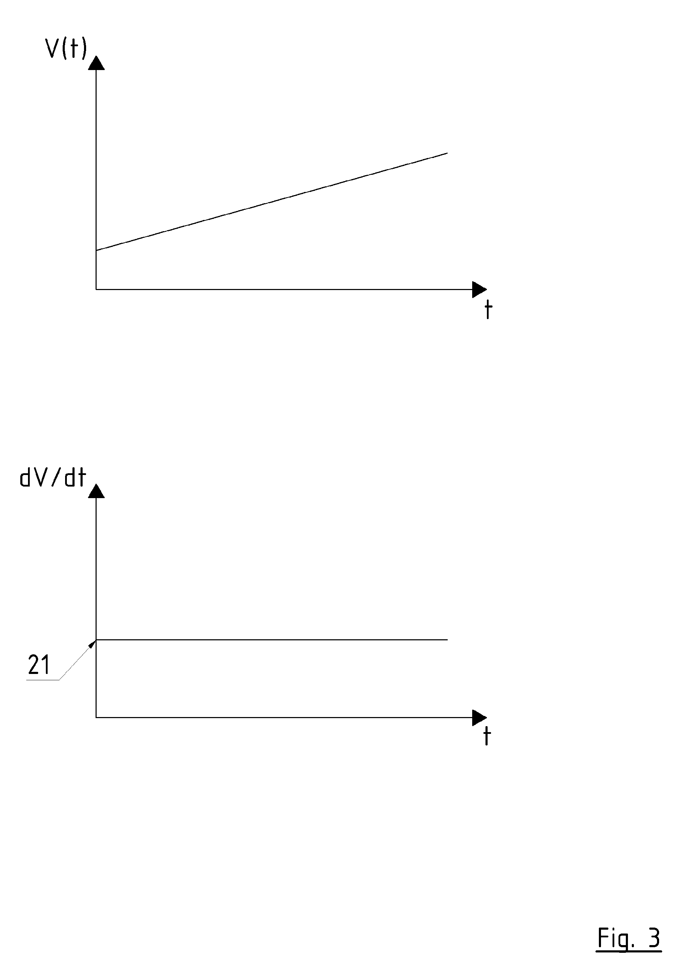

In Figur 3 ist in der oberen Darstellung grafisch veranschaulicht, wie sich das Füllvolumen V in Abhängigkeit der Zeit t verändert, wenn der Bunkertank 1 über den Zu- und Ablauf 11 mit konstantem Brennstoffvolumenstrom, gemessen im Durchflussmesser 12, befüllt wird.

Dabei zeigt die untere Grafik der Figur 3 den konstanten Brennstoffvolumenstrom 21 im zeitlichen Verlauf als Konstante.

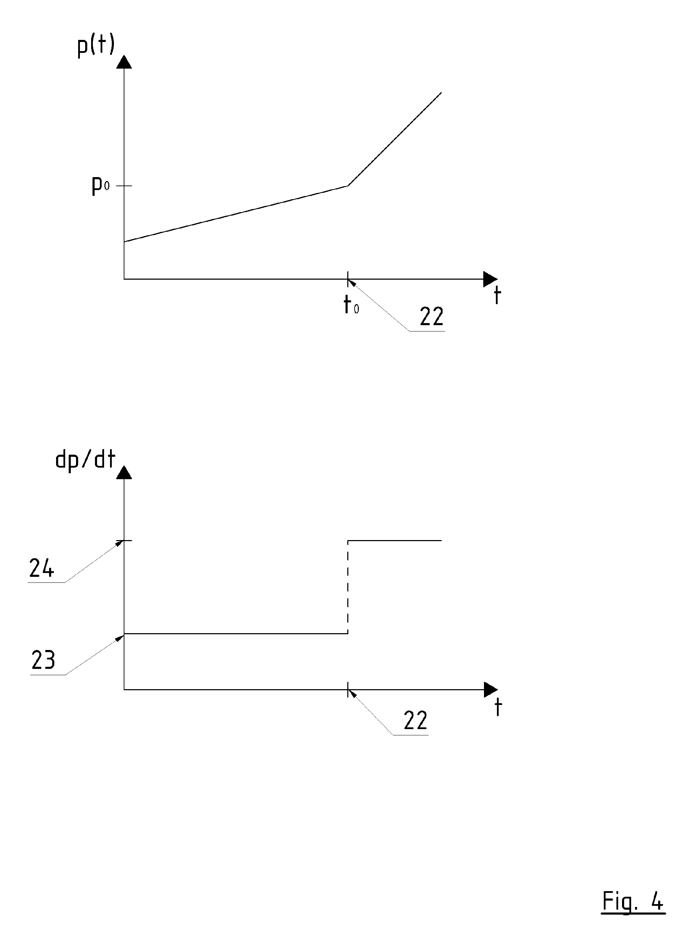

Schließlich zeigt Figur 4 in der oberen Grafik den zeitlichen Verlauf des mit der Druckmesssonde 6 gemessenen hydrostatischen Druck 7 am Boden des Bunkertanks 1.

Das untere Bild der Figur 4 zeigt die zugehörige Druckänderungsrate als zeitliche Ableitung des hydrostatischen Drucks gemäß der oberen Grafik. Wie zu erkennen, erfolgt zu dem mit 22 gekennzeichneten Zeitpunkt eine signifikante Änderung der Druckänderungsrate $\frac{\partial p}{\partial t}$ von der Druckänderungsrate 23, welche beim Befüllen des Bunkertanks 1 im unteren quaderförmigen Abschnitt 2 mit dem konstanten Brennstoffvolumenstrom 21 maßgeblich ist, zu der

Druckänderungsrate 24, welche beim Befüllen mit dem konstanten Brennstoffvolumenstrom 21 des oberen quaderförmigen Abschnitts 3 maßgeblich ist.

Um nun gemäß dem erfindungsgemäßen Verfahren eine Brennstoffdichte eines in dem Bunkertank 1 gebunkerten Brennstoffs zu bestimmen, wird wie folgt vorgegangen: Über die Auswerte- und Steuereinheit 15 wird mit einer geeigneten Abtastrate der hydrostatische Druck p 7 gemessen. Dabei wird über den Zu- und Ablauf 11 Brennstoff in den Bunkertank 1 zugeführt. Mittels des Durchflussmessers 12 im Zu- und Ablauf 11 wird der Brennstoffvolumenstrom 21 gemessen. Dieser ist gemäß dem hier besprochenen Beispiel konstant, wie in Figur 3 veranschaulicht.

Dabei ist der ausgängliche untere Füllstand 8 unterhalb des Übergangsfüllstands 10. Die Aufzeichnung des hydrostatischen Drucks p 7 über die Druckmesssonde 6 wird während der Bebunkerung über den Zu- und Ablauf 11 so lange durchgeführt, bis ein oberer Füllstand 9 oberhalb des Übergangsfüllstands 10 erreicht ist. Die graphische Veranschaulichung der bei dieser Messung erhaltenen Messwertreihe ist im oberen Bild der Figur 4 gezeigt.

Mithilfe der Auswerte- und Steuereinheit 15 wird nun zu der zum Zeitpunkt 22 herrschenden Druckänderungsrate 24 anhand der in den Figuren 2 veranschaulichten Daten der Tanktabelle ein Füllvolumen 18 und eine dazugehörige Füllstandsänderungsrate 20 ermittelt, wobei die Daten aus den Schaubildern der Figur 2 in der Auswerte- und Steuereinheit 15 in der Datenbank 16 abgelegt sind.

Somit konnte erfindungsgemäß überraschend einfach anhand der signifikanten Änderung eines Druckmesswertes gemäß Figur 4 im Ergebnis eine Bestimmung des Füllvolumens 18 erfolgen, welche wiederum eine Feststellung der für den gegebenen oberen Füllstand 9 maßgeblichen Füllstandsänderungsrate 20 im oberen Abschnitt des Bunkertanks 1 ermöglicht.

Anhand der Formel

$$\rho = \frac{\frac{\partial p}{\partial t}}{g \frac{\partial V}{\partial t} \frac{\partial h}{\partial V}}$$

ist nun eine Bestimmung der Dichte des gebunkerten Brennstoffs möglich, wobei lediglich Messwerte der Druckmesssonde 6 für den hydrostatischen Druck am Boden des Bunkertanks 1 und des Durchflussmessers 12 benötigt werden, nicht jedoch zum Beispiel eine Temperaturmessung.

Im einfachsten Falle kann anhand des in Fig. 1 gezeigten Aufbaus eine Messung der Dichte und dadurch eine Messung der Masse des im Tank 1 gebunkerten Brennstoffs durchgeführt werden, ohne dass es auf eine Messung des Brennstoffvolumenstroms im Durchflussmesser 12 ankommt. Dem liegt die in der Praxis häufig erfüllte Annahme zu Grunde, dass der Brennstoffvolumenstrom sich nicht sprunghaft ändert bzw. dass etwaige sprunghafte Änderungen im Brennstoffvolumenstrom nicht gerade dann auftreten, wenn ein Füllstand ein Übergangsfüllstand 10 überstreicht. Gemäß dieser Ausführungsform genügt es, den zeitlichen Verlauf des Drucks zu beobachten, wie in Fig. 4 oben schematisch skizziert. Durch Auswerten der Druckänderungsrate, vergleiche Fig. 4 unten, wird der Zeitpunkt 22 ermittelt, an welchem der Druck im zeitlichen Verlauf einen Knick aufweist, entsprechend einem Sprung in der Druckänderungsrate gemäß dem unteren Teil der Fig. 4. Der zum Zeitpunkt 22 gemessene Druck p0 wird anhand der Kenntnis der Tankgeometrie, beispielsweise durch Nachschlagen in einer Tanktabelle, deren Information im oberen Teil der Fig. 2 skizziert es, mit dem Erreichen des Übergangsfüllstands 10, bei welchem die Füllstandshöhe als Funktion des Füllvolumens ebenfalls eine Knick erfährt, identifiziert. Anhand des hydrostatischen Druckes, welcher zum Zeitpunkt 22 gemessen wurde, und des diesem hydrostatischen Druckmesswert zugeordneten Übergangsfüllstands 10 kann anhand der für sich genommen bekannten Formel

$$\rho = \frac{p_0}{g h_0}$$

Sofern für den weiteren Verlauf der Bebunkerung die Dichte konstant bleibt, kann fortan anhand der Formel

$$h = \frac{h_0}{p_0} p$$

der dichtekorrigierte Füllstand allein aus dem hydrostatischen Druck p ermittelt werden. Anhand einer Tanktabelle (vergleiche beispielsweise Fig. 2) kann dem Füllstand h ein Volumen zugeordnet werden. Die gebunkerte Brennstoffmasse ergibt sich sodann durch einfache Multiplikation der Brennstoffdichte mit dem auf diese Weise ermittelten Volumen. Einer Durchflussmessung bedarf es für dieses Verfahren erfindungsgemäß nicht.

BEZUGSZEICHENLISTE

1     Bunkertank
2     unterer quaderförmiger Abschnitt
3     oberer quaderförmiger Abschnitt
4     Querschnittsfläche
5     Querschnittsfläche
6     Druckmesssonde
7     hydrostatischer Druck
8     unterer Füllstand
9     oberer Füllstand
10    Übergangsfüllstand
11    Zu- und Ablauf
12    Durchflussmesser
13
14
15    datentechnische Auswerte- und Steuereinheit
16    Datenbank
17    Knick
18    Füllvolumen
19    Füllstandsänderungsrate im unteren Abschnitt
20    Füllstandsänderungsrate im oberen Abschnitt
21    konstanter Brennstoffvolumenstrom
22    Zeitpunkt
23    Druckänderungsrate im unteren Abschnitt
24    Druckänderungsrate im oberen Abschnitt

**Patentansprüche**

1.   Verfahren zum Bestimmen einer Brennstoffdichte eines in einem Tank (1), insbesondere Bunkertank eines Schiffes, gebunkerten Brennstoffs, umfassend die Schritte

a. laufendes Messen eines hydrostatischen Drucks am Boden des Tanks;

**dadurch gekennzeichnet, dass** es folgende weitere Schritte umfasst:

b. Variieren des Füllvolumens des in dem Tank (1) gebunkerten Brennstoffs durch Zu- oder Abführen einer Brennstoffmenge mit einem Brennstoffvolumenstrom (21);
c. Berechnen der Dichte in Abhängigkeit des Drucks und einer weiteren bei Schritt b) veränderlichen Größe.

2.   Verfahren nach Anspruch 1, **dadurch gekennzeichnet, dass** es einen gleichzeitig mit Schritt b) auszuführenden weiteren Schritt

d. Ermitteln einer zeitlichen Druckänderungsrate (23, 24) des hydrostatischen Drucks; umfasst, wobei die weitere veränderliche Größe die zeitliche Druckänderungsrate (23, 24) des hydrostatischen Drucks ist.

3.   Verfahren nach Anspruch 1 oder 2, **dadurch gekennzeichnet, dass** es einen gleichzeitig mit Schritt b) auszuführenden weiteren Schritt

e. Auslesen des Ausgangssignals eines bei einem gegebenen Referenzfüllstand schaltenden Füllstandsgrenzwertgebers;

umfasst, wobei die weitere veränderliche Größe das Ausgangssignal des Füllstandsgrenzwertgebers ist, wobei vorzugsweise das Variieren des Füllvolumens derart erfolgt, dass der Füllstand einen Referenzfüllstand überstreicht; und vorzugsweise folgende weitere Schritte durchgeführt werden:

f. Ermitteln des Referenzfüllstands; wobei die Berechnung der Dichte als Funktion des Referenzfüllstands und des hydrostatischen Drucks beim Referenzfüllstand erfolgt.

4.   Verfahren nach einem der vorhergehenden Ansprüche, **dadurch gekennzeichnet, dass** der Brennstoffvolumenstrom während Schritt b) konstant gehalten wird,
und/oder wobei insbesondere bei konstantem Brennstoffvolumenstrom, bei Detektion einer signifikanten Änderung des hydrostatischen Drucks während Schritt b) ein zugehöriger Füllstand des Tanks (1) ermittelt wird, indem in einer Tanktabelle ein Übergangsfüllstand (10), an dem eine signifikante Änderung der Füllstandsänderungsrate vorliegt, ausgewählt wird.

**5.** Verfahren nach einem der vorhergehenden Ansprüche, **dadurch gekennzeichnet, dass** der Tank (1) eine in vertikaler Richtung variable Querschnittsfläche aufweist, wobei das Variieren des Füllvolumens vorzugsweise derart erfolgt, dass der Füllstand über einen Bereich mit einer signifikanten Änderung der Querschnittsfläche des Tanks (1) variiert, wobei der Tank (1) vorzugsweise mindestens zwei übereinander angeordnete quaderförmige Abschnitte aufweist, wobei der Übergangsfüllstand (10) am Übergang zwischen den quaderförmigen Abschnitten vorliegt.

**6.** Verfahren nach einem der vorhergehenden Ansprüche, **dadurch gekennzeichnet, dass** es folgenden weiteren Schritt umfasst

g. Ermitteln einer, einer Änderung des Füllvolumens entsprechenden, Füllstandsänderungsrate des Füllstands; wobei die Berechnung der Dichte als Funktion der zeitlichen Druckänderungsrate, der Füllstandsänderungsrate und des Brennstoffvolumenstroms durchgeführt wird.

**7.** Verfahren nach einem der vorhergehenden Ansprüche, **dadurch gekennzeichnet, dass** die Füllstandsänderungsrate anhand einer den Zusammenhang zwischen Füllstand und Füllvolumen kennzeichnenden Tanktabelle ermittelt wird.

**8.** Verfahren nach einem der vorhergehenden Ansprüche, **dadurch gekennzeichnet, dass** der Brennstoffvolumenstrom gemessen wird.

**9.** Verfahren nach einem der vorhergehenden Ansprüche, **dadurch gekennzeichnet, dass** das Füllvolumen des im Tank (1) gebunkerten Brennstoffs gemessen wird.

**10.** Verfahren nach einem der vorhergehenden Ansprüche, **dadurch gekennzeichnet, dass** die Füllstandsänderungsrate als Funktion des Füllvolumens des Tanks (1) ermittelt wird.

**11.** Verfahren zum Bestimmen einer Brennstoffmasse eines in einem Tank (1), insbesondere Bunkertank eines Schiffes, gebunkerten Brennstoffs, umfassend die Schritte

a. Bestimmen einer Brennstoffdichte des Brennstoffs;
b. Messen eines hydrostatischen Drucks am Boden des Tanks (1);
c. Bestimmen eines Füllstands als Funktion des im Schritt b) gemessenen Drucks und der in Schritt a) bestimmten Dichte;
d. Ermitteln eines Füllvolumens als Funktion des Füllstandes;
e. Berechnen der Brennstoffmasse als Funktion der Brennstoffdichte und des Füllvolumens; **dadurch gekennzeichnet, dass** die Brennstoffdichte anhand eines Verfahrens nach einem der Ansprüche 1 bis 10 bestimmt wird.

**12.** Verfahren nach Anspruch 11, **dadurch gekennzeichnet, dass** das Füllvolumen anhand einer den Zusammenhang zwischen Füllstand und Füllvolumen kennzeichnenden Tanktabelle ermittelt wird.

**13.** Datentechnische Auswerte- und Steuereinheit zur Durchführung eines Verfahrens nach einem der Ansprüche 1 bis 10 zum Bestimmen einer Brennstoffdichte eines in einem Tank (1), insbesondere Bunkertank eines Schiffes, gebunkerten Brennstoffs, und/oder dass sie eine Datenbank mit einer den Zusammenhang zwischen Füllstand und Füllvolumen kennzeichnenden Tanktabelle umfasst.

**14.** Auswerte- und Steuereinheit nach Anspruch 13, welche ausgelegt ist, um gleichzeitig mit Schritt b) eine zeitliche Druckänderungsrate des hydrostatischen Drucks und/oder eine, einer Änderung des Füllvolumens entsprechende, Füllstandsänderungsrate des Füllstands zu ermitteln und die Dichte als Funktion der zeitlichen Druckänderungsrate und/oder der Füllstandsänderungsrate und/oder des Brennstoffvolumenstroms zu berechnen, wobei sie vorzugsweise Druckmessmittel zum Messen eines hydrostatischen Drucks am Boden des Tanks (1) und/oder Mittel zum Ermitteln eines Brennstoffvolumenstroms umfasst.

**15.** Datentechnische Auswerte- und Steuereinheit zur Durchführung eines Verfahrens nach einem der Ansprüche 11 bis 12 zum Bestimmen einer Brennstoffmasse eines in einem Tank (1), insbesondere Bunkertank eines Schiffes, gebunkerten Brennstoffs, **dadurch gekennzeichnet, dass** sie eine datentechnische Auswerte- und Steuereinheit zur Durchführung eines Verfahrens zum Bestimmen einer Brennstoffdichte nach einem der Ansprüche 13 bis 14 umfasst, welche vorzugsweise Druckmessmittel zum Messen eines hydrostatischen Drucks am Boden des Tanks (1) und/oder Mittel zum Ermitteln eines Brennstoffvolumenstroms umfasst.

Fig.1

Fig. 2

V(t)

t

dV/dt

21

t

Fig. 3

Fig. 4

**Europäisches Patentamt**
**European Patent Office**
**Office européen des brevets**

# EUROPÄISCHER RECHERCHENBERICHT

Nummer der Anmeldung

EP 15 18 5211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/170543 A1 (A SCHAFFER JOSEPH [US] ET AL) 3. August 2006 (2006-08-03) | 1-12 | INV.<br>G01N9/04 |
| Y | * Zusammenfassung *<br>* Abbildungen 1,2 *<br>* Absatz [0007] * | 13-15 | G01N9/26<br>G01F23/14 |
| | ----- | | |
| X | EP 1 431 722 A2 (BOSCH GMBH ROBERT [DE]) 23. Juni 2004 (2004-06-23)<br>* Zusammenfassung *<br>* Abbildung 2 * | 1-12 | |
| | ----- | | |
| Y | US 4 553 216 A (STEVENS GLENN G [US] ET AL) 12. November 1985 (1985-11-12)<br>* Abbildung 5 *<br>* Spalte 8, Zeile 48 - Spalte 9, Zeile 42 * | 13-15 | |
| | ----- | | |

RECHERCHIERTE SACHGEBIETE (IPC)

G01N
G01F

Der vorliegende Recherchenbericht wurde für alle Patentansprüche erstellt

| Recherchenort | Abschlußdatum der Recherche | Prüfer |
|---|---|---|
| Den Haag | 29. Januar 2016 | Seifter, Achim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 18 5211

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2016

| Im Recherchenbericht angeführtes Patentdokument | Datum der Veröffentlichung | Mitglied(er) der Patentfamilie | Datum der Veröffentlichung |
|---|---|---|---|
| US 2006170543 A1 | 03-08-2006 | EP 1524506 A2<br>US 2005088307 A1<br>US 2006170543 A1 | 20-04-2005<br>28-04-2005<br>03-08-2006 |
| EP 1431722 A2 | 23-06-2004 | KEINE | |
| US 4553216 A | 12-11-1985 | KEINE | |

Für nähere Einzelheiten zu diesem Anhang : siehe Amtsblatt des Europäischen Patentamts, Nr.12/82

EPO FORM P0461